# EUROPEAN PATENT SPECIFICATION

(11) **EP 2 974 928 B1**
(45) Date of publication and mention of the grant of the patent: **06.10.2021**
(21) Application number: 14762660.0
(22) Date of filing: 12.03.2014
(51) Int. Cl.: B60W 10/04, B60W 10/06, B60W 10/101, B60W 10/107, F02D 9/02, F02D 29/00, F02D 41/04, F16H 61/16

(54) **SADDLED VEHICLE AND CONTROL METHOD FOR SADDLED VEHICLE**
SATTELFAHRZEUG UND STEUERUNGSVERFAHREN FÜR DAS SATTELFAHRZEUG
VÉHICULE À SELLE ET PROCÉDÉ DE COMMANDE POUR VÉHICULE À SELLE

(30) Priority: 12.03.2013 JP 2013049638
(43) Date of publication of application: 20.01.2016
(73) Proprietor: Yamaha Hatsudoki Kabushiki Kaisha, Iwata-shi, Shizuoka 438-8501 (JP)
(72) Inventor: ISHIOKA, Kazutoshi, Iwata-shi Shizuoka 438-8501 (JP)
(74) Representative: Grünecker Patent- und Rechtsanwälte PartG mbB
(86) International application number: PCT/JP2014/056584
(87) International publication number: WO 2014/142211

(56) References cited:
- EP-A2- 1 743 822
- WO-A1-03/041990
- WO-A2-2011/021089
- DE-A1- 4 229 585
- JP-A- H08 326 858
- JP-A- 2002 326 526
- JP-A- 2005 139 947
- JP-A- 2010 248 956
- None

## Description

The present invention relates to a straddled vehicle and a method of controlling a straddled vehicle.

Prior art document WO 2011/021089 A2 discloses a vehicle equipped with an engine and a transmission, wherein a basic shift map is provided to control the gear ratio that should be set by the transmission. This vehicle speed map is used when the so-called sport mode is nor selected or set and sets a gear ratio according to a vehicle speed and a target engine revolution speed for a continuously variable transmission. The required drive power is found from a drive power map on the basis of an accelerator depression amount and vehicle speed serving as driving requirement amount. The required power of the engine is determined from the required drive power and the vehicle speed or the engine revolution speed. A target engine revolution speed at which the required output is outputted with optimum fuel efficiency is determined on the basis of an engine revolution speed map, and a gear ratio of the continuously variable transmission is controlled so as to attain the target engine revolution speed. Thus, the transmission is caused to function as a revolution speed control mechanism for the engine.

It is known that, in a four-wheeled automobile including an electronically controlled throttle valve and an electronically controlled continuously variable transmission, both the electronically controlled throttle valve and the electronically controlled continuously variable transmission may be controlled in cooperation, to thereby achieve fuel efficient running.

For example, in Japanese Patent No. 3754188, there is disclosed a drive force control device being configured to determine a target engine revolution speed, which is a point on an optimum fuel efficiency line, based on a vehicle speed and a required axle drive force, determine a target gear ratio of the continuously variable transmission based on the target engine revolution speed and a transmission output revolution speed, and determine a target throttle opening degree based on the required axle drive force and an axle revolution speed, to thereby control each of the electronically controlled continuously variable transmission and the electronically controlled throttle valve.

When the above-mentioned drive force control device to be used for the four-wheeled automobile is directly used for a straddled vehicle such as a motorcycle, the following undesirable behaviors occur.

First, the response of acceleration from the fuel efficient running is significantly delayed. In general, the fuel efficient running is achieved by decreasing the revolution speed of the engine and decreasing the gear ratio. Regarding this point, in light vehicles such as the straddled vehicle, the inertial mass of the vehicle is smaller than that of the four-wheeled automobile, and the ratio of rotary members, such as the engine and the transmission, occupied in the inertial mass is high. Further, the regularly used revolution speed of the engine is 3,000 rpm to 6,000 rpm, which is higher than 1,500 rpm to 3,000 rpm corresponding to the regularly used revolution speed of the engine in a general four-wheeled automobile. Therefore, once the engine revolution speed is decreased, even when acceleration is attempted, the response is delayed because energy is consumed by the inertial loss of the rotary members.

Second, when the vehicle is accelerated from the fuel efficient running, the vehicle is liable to vibrate, which disturbs the ride quality. When an acceleration operation is performed under a state in which the engine revolution speed is decreased due to the fuel efficient running, the throttle valve is significantly opened under a low engine revolution speed state. This state corresponds to a condition that generates uncomfortable vibrations in a reciprocating engine that is widely used at present.

The present invention has been made in view of the above-mentioned circumstances, and has an object to provide a straddled vehicle and a method of controlling a straddled vehicle that promptly suppress the uncomfortable vibrations while achieving both the fuel efficient running and acceleration responsiveness in the straddled vehicle including the electronically controlled throttle valve and the electronically controlled continuously variable transmission.

According to the present invention said object is solved by a straddled vehicle having the features of independent claim 1. Moreover, said object is also solved by a method of controlling a straddled vehicle having the features of independent claim 8. Preferred embodiments are laid down in the dependent claims.

### Brief Description of Drawings

FIG. 1 is a side view of a straddled vehicle according to an embodiment of the present invention.
FIG. 2 is a functional block diagram of the straddled vehicle according to the embodiment of the present invention.
FIG. 3 is a control block diagram illustrating control to be achieved by a control device.
FIG. 4 is a graph showing an example of an engine revolution speed map.
FIG. 5 is a graph showing an example of an engine torque map.
FIG. 6 is a diagram illustrating an example of a control block of a target output calculation unit.
FIG. 7 is a diagram illustrating an example of a control block of a reverse conversion unit.
FIG. 8 is a graph showing an example of a change in running state in a basic operation when the straddled vehicle performs fuel efficient running.
FIG. 9 is a functional block diagram of a final engine revolution speed calculation unit.
FIG. 10 is a diagram schematically illustrating a map to be referred to when an optimum efficiency revolution speed calculation unit and a lower-limit engine revolution speed calculation unit of the final engine revolution speed calculation unit calculate an optimum efficiency revolution speed and a lower-limit engine revolution speed, respectively.
FIG. 11 is a functional block diagram of a target engine revolution speed calculation unit.
FIG. 12 is a flow chart of control to be executed in lag processing.
FIG. 13 is a flow chart of control to be executed in a basic correction revolution speed calculation unit.
FIG. 14 is a graph showing an example of a change in running state of the straddled vehicle.
FIG. 15 is a graph showing temporal changes of a basic engine revolution speed, a final engine revolution speed, a target engine revolution speed, a differential revolution speed, a basic correction revolution speed, and a correction revolution speed during transition of the running state of the straddled vehicle from a point A to a point B'.
FIG. 16 is a graph showing temporal changes of the basic engine revolution speed, the final engine revolution speed, the target engine revolution speed, the differential revolution speed, the basic correction revolution speed, and the correction revolution speed during transition of the running state of the straddled vehicle from the point B' to a point E'.
FIG. 17 is a graph showing an example of a change in running state of the straddled vehicle during use of an engine brake.
FIG. 18 is a graph showing temporal changes of the basic engine revolution speed, the final engine revolution speed, the target engine revolution speed, the differential revolution speed, the basic correction revolution speed, and the correction revolution speed during transition of the running state of the straddled vehicle from the point B' to a point H' and then to the point B' again.
FIG. 19 is a flow chart of control to be executed by a modified example of the lag processing.

### Description of Embodiments

Now, an embodiment of the present invention is described with reference to the drawings.

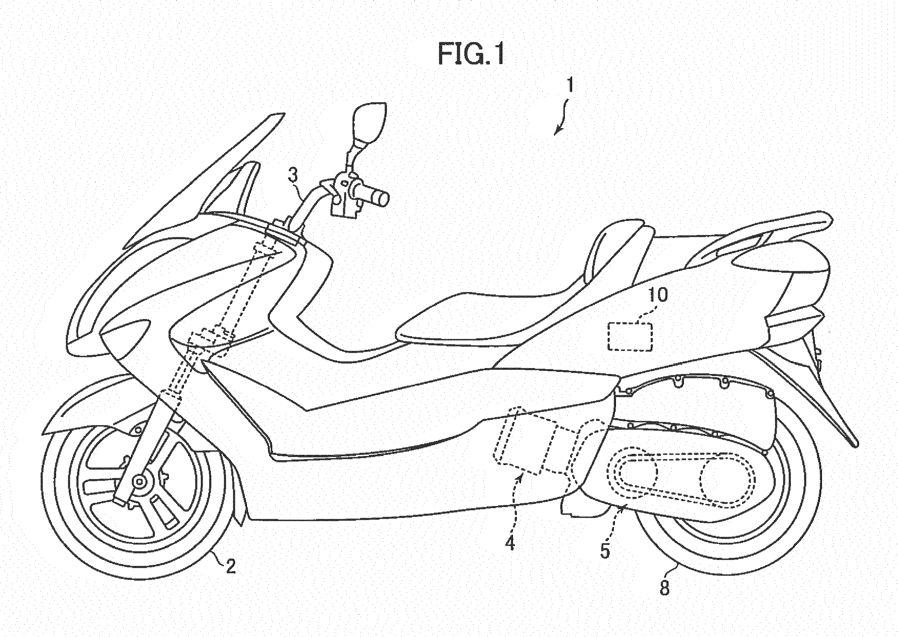

FIG. 1 is a side view of a straddled vehicle 1 according to the embodiment of the present invention. The straddled vehicle herein refers to an automotive vehicle including a saddle on which an occupant sits astride, and examples thereof include a motorcycle, a motor tricycle, a three-wheeled or four-wheeled buggy called an all terrain vehicle (ATV), and a snowmobile. In this embodiment, a motorcycle is exemplified as the straddled vehicle 1, but the motorcycle is represented as an example of the straddled vehicle 1.

The straddled vehicle 1 includes, as illustrated in FIG. 1, a front wheel 2 and a steering handle 3 for steering the front wheel 2. A right grip of the steering handle 3 is an accelerator grip (invisible in FIG. 1), and when an occupant operates the accelerator grip for rotation, an accelerator operation amount, which is the operation amount of the accelerator grip, is detected by an accelerator sensor provided to the accelerator grip.

Further, rotational power generated by an engine 4 is transmitted via an electronically controlled continuously variable transmission 5 to a rear wheel 8 serving as a drive wheel. The electronically controlled continuously variable transmission 5 transmits power via a clutch to a final reduction mechanism (not shown) and the rear wheel 8 arranged on the further downstream.

The engine 4 is a general reciprocating engine, and the form thereof, for example, whether the engine 4 is a two-stroke engine or a four-stroke engine, or the number of cylinders is not particularly limited. Further, the engine 4 includes an electronically controlled throttle valve, and its intake amount is controlled based on the instruction from a control device 10 to be described later.

Further, the electronically controlled continuously variable transmission 5 includes an input shaft that interlocks with a crankshaft of the engine 4, and an output shaft. The electronically controlled continuously variable transmission 5 continuously changes the gear ratio of the output shaft with respect to the input shaft based on the instruction from the control device 10 to be described later. The form of the electronically controlled continuously variable transmission 5 is not particularly limited, but this embodiment employs a form in which a V-belt is looped around a drive pulley arranged on the input shaft and a driven pulley arranged on the output shaft. A continuously variable transmission actuator axially moves one of two sheaves constructing the drive pulley to change an apparent diameter in which the V-belt and the drive pulley engage with each other, and controls the gear ratio along therewith. Further, the electronically controlled continuously variable transmission 5 according to this embodiment incorporates the clutch, and the output shaft and the driven pulley are connected to each other through intermediation of this clutch. The form of the clutch is not necessarily limited. In this embodiment, a so-called centrifugal clutch is used, in which, when the revolution speed input to the clutch, that is, the revolution speed of the driven pulley becomes a certain revolution speed or more, a clutch shoe is pressed against a clutch outer due to an action of a centrifugal force acting on a weight provided to the clutch, to thereby transmit power to the output side.

The control device 10 is a device for controlling the operation of the entire straddled vehicle 1, and may be constructed of a general computer including a central processing unit (CPU) and a memory, or an electronic circuit such as a so-called microcontroller or a digital signal processor (DSP) . The control device 10 sends instructions to the above-mentioned electronically controlled throttle valve and continuously variable transmission actuator, and inputs signals from respective sensors as described later. A substrate having the control device 10 mounted thereon is arranged at an appropriate position of a vehicle body of the straddled vehicle 1.

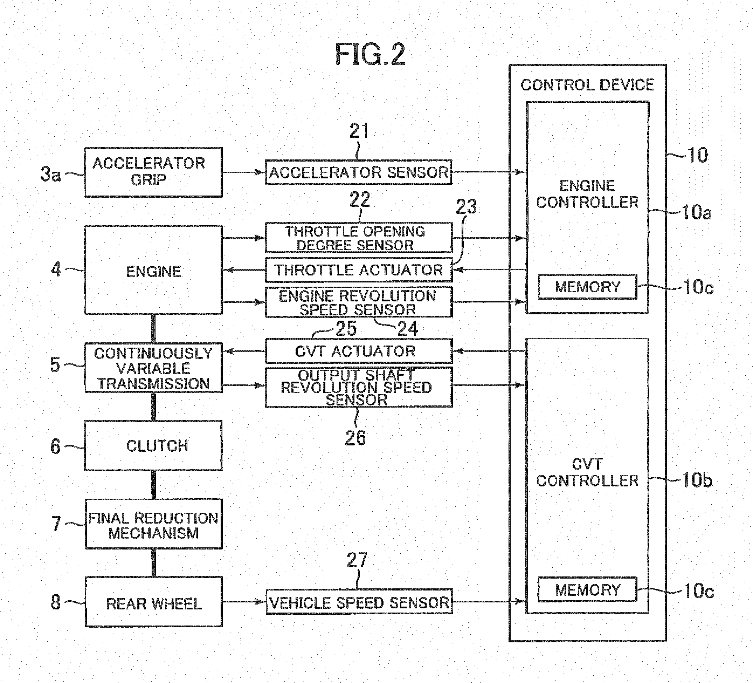

FIG. 2 is a functional block diagram of the straddled vehicle 1 according to this embodiment. In a torque transmission path from the engine 4 to the rear wheel 8, the electronically controlled continuously variable transmission 5, a clutch 6, and a final reduction mechanism 7 are sequentially arranged. In FIG. 2, the electronically controlled continuously variable transmission 5 and the clutch 6 are separately illustrated for clarifying the torque transmission path, but as described above, the clutch 6 is incorporated in the electronically controlled continuously variable transmission 5, and hence the output from the clutch 6 corresponds to the output of the output shaft of the electronically controlled continuously variable transmission 5. As a matter of course, the electronically controlled continuously variable transmission 5 and the clutch 6 may be connected as separate members . Further, an accelerator operation amount, a throttle opening degree, an engine revolution speed, an output shaft revolution speed, and a vehicle speed are input to the control device 10. The accelerator operation amount is an output signal from an accelerator sensor 21 provided to the steering handle 3 (see FIG. 1), for detecting the operation amount of an accelerator grip 3a. The throttle opening degree is an output signal from a throttle opening degree sensor 22 provided to the engine 4, for detecting the opening degree of the electronically controlled throttle valve. The engine revolution speed is an output signal from an engine revolution speed sensor 24 provided to the engine 4, for detecting the speed of revolutions of the crankshaft. The output shaft revolution speed is an output signal from an output shaft revolution speed sensor 26 provided to the electronically controlled continuously variable transmission 5, for detecting the speed of revolutions of the output shaft of the electronically controlled continuously variable transmission 5. The vehicle speed is an output signal from a vehicle speed sensor 27 provided to an axle of the rear wheel 8, for detecting the vehicle speed of the straddled vehicle 1. Further, the control device 10 sends an instruction to a throttle actuator 23 to control the opening degree of the electronically controlled throttle valve provided to the engine 4. Further, the control device 10 sends an instruction to a CVT actuator 25 to control the gear ratio of the electronically controlled continuously variable transmission 5.

Note that, the control device 10 in this embodiment includes an engine controller 10a and a CVT controller 10b. The engine controller 10a and the CVT controller 10b are each constructed of an independent integrated circuit. Then, the accelerator operation amount, the throttle opening degree, and the engine revolution speed are input to the engine controller 10a, and the output shaft revolution speed and the vehicle speed are input to the CVT controller 10b. The engine controller 10a and the CVT controller 10b can be communicated with each other. With this configuration, for example, the CVT controller 10b can receive the accelerator operation amount, the throttle opening degree, the engine revolution speed, and the result of calculation by the engine controller 10a. Similarly, the engine controller 10a can receive the output shaft revolution speed, the vehicle speed, and the result of calculation by the CVT controller 10b. Further, the engine controller 10a and the CVT controller 10b each include a memory 10c, which stores computer programs to be executed by the engine controller 10a or the CVT controller 10b, and various data such as parameters, tables, and maps to be used for control of the straddled vehicle 1. Note that, the configuration of the control device 10 is merely an example, and any circuit configuration may be employed as long as similar functions can be achieved. For example, the control device 10 may be achieved by a single integrated circuit.

Subsequently, the control of the straddled vehicle 1 to be achieved by the control device 10 is described.

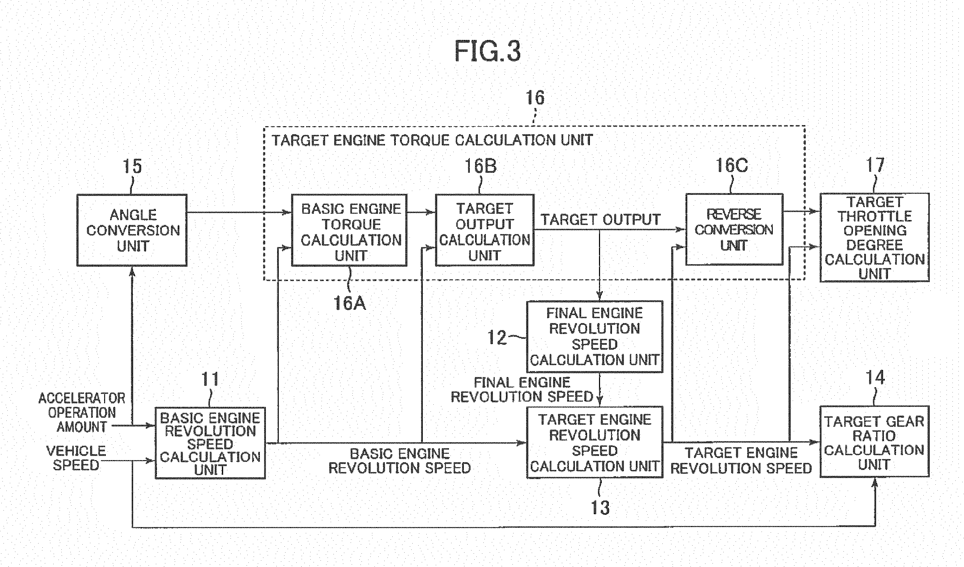

FIG. 3 is a control block diagram illustrating the control to be achieved by the control device 10. Note that, the control described herein is only required to be achieved by the entire control device 10, and whether the individual control blocks are achieved by the above-mentioned engine controller 10a or CVT controller 10b is arbitrary. Further, the individual control blocks may be achieved by a physical electrical circuit, but, in this embodiment, the individual control blocks are virtually achieved by software executed on the engine controller 10a or the CVT controller 10b.

First, description is made of basic control of determining, based on the accelerator operation amount and the vehicle speed, a target throttle opening degree and a target gear ratio that correspond to instruction values to the throttle actuator 23 and the CVT actuator 25 (or converted values thereof) . Note that, the target throttle opening degree is an opening degree of the electronically controlled throttle valve to be achieved by the control, and the target gear ratio is a gear ratio of the electronically controlled continuously variable transmission 5 to be achieved by the control.

First, the processing for obtaining the target gear ratio is described. The control device 10 includes a basic engine revolution speed calculation unit 11, a final engine revolution speed calculation unit 12, a target engine revolution speed calculation unit 13, and a target gear ratio calculation unit 14 illustrated in FIG. 3. The control device 10 repeatedly executes processing executed by those control blocks at a predefined cycle.

The basic engine revolution speed calculation unit 11 calculates a basic engine revolution speed based on the vehicle speed and, in this embodiment, the accelerator operation amount detected by the accelerator sensor 21. The basic engine revolution speed herein refers to a target value of the speed of revolutions of the crankshaft of the engine 4, which is uniquely obtained through conversion based on information relating to the vehicle speed and other information, namely, information relating to the accelerator operation amount in this embodiment, and refers to a value not corrected by the target engine revolution speed calculation unit 13 to be described later. Note that, the information relating to the accelerator operation amount herein refers to information having one-to-one correspondence with the accelerator operation amount through appropriate conversion, and the information relating to the vehicle speed herein refers to revolution speeds of members arranged subsequent to the output shaft of the transmission (electronically controlled continuously variable transmission 5 in this embodiment) or information obtained based on the revolution speeds, the information having one-to-one correspondence with the vehicle speed through appropriate conversion. The members arranged subsequent to the output shaft of the transmission include, in addition to the output shaft of the electronically controlled continuously variable transmission 5 itself, arbitrary gears included in the final reduction mechanism 7, the rear wheel 8, the axle thereof, and the like. The revolution speeds of those members are converted to have one-to-one correspondence with the vehicle speed through appropriate conversion. For example, the speed of revolutions of the rear wheel 8 is converted into the vehicle speed through multiplication by the perimeter of the rear wheel 8, and hence the speed of revolutions of the rear wheel 8 is the information relating to the vehicle speed. Note that, when the electronically controlled continuously variable transmission 5 does not incorporate the clutch 6, the revolution speed of the output shaft of the electronically controlled continuously variable transmission 5 may be treated as the information relating to the vehicle speed as long as the clutch 6 on the downstream thereof is connected.

In this embodiment, the accelerator operation amount and the vehicle speed are used as the information relating to the accelerator operation amount and the information relating to the vehicle speed, respectively, but other information may be used if the pieces of information correspond to the information relating to the accelerator operation amount and the information relating to the vehicle speed.

The memory 10c stores a map that associates the accelerator operation amount and the vehicle speed with the engine revolution speed (hereinafter referred to as "engine revolution speed map") . The basic engine revolution speed calculation unit 11 refers to the engine revolution speed map to calculate the engine revolution speed corresponding to the accelerator operation amount and the vehicle speed, and sets the engine revolution speed as the basic engine revolution speed.

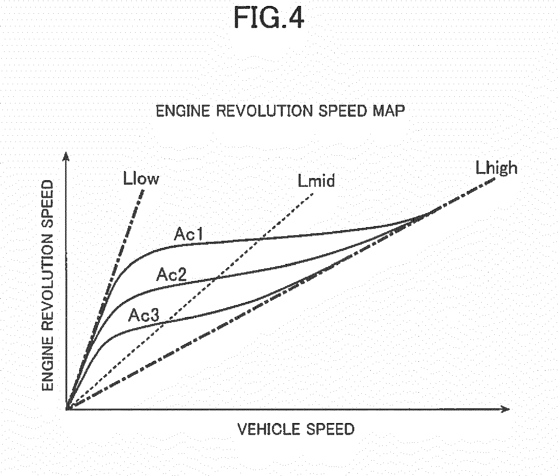

FIG. 4 is a graph showing an example of the engine revolution speed map. The memory 10c stores data obtained by quantifying the map. In the engine revolution speed map shown in FIG. 4, the horizontal axis represents a vehicle speed, and the vertical axis represents an engine revolution speed. FIG. 4 exemplifies curves Ac1 to Ac3 that correspond to respective accelerator operation amounts. In this case, the curves Ac1 to Ac3 have correspondence to specific accelerator operation amounts. For example, the curve Ac1 is selected under a specific state in which the accelerator operation amount is large, the curve Ac3 is selected under a specific state in which the accelerator operation amount is small, and the curve Ac2 is selected under an intermediate state. Note that, a larger number of curves than those shown in FIG. 4 are actually prepared so as to support finer changes of the accelerator operation amount.

In this case, when a curve corresponding to a certain accelerator operation amount, as an example, the curve Ac1 is selected, the engine revolution speed is determined based on the vehicle speed at that time point. As is understood from FIG. 4, even at the same vehicle speed, the curve to be selected differs when the accelerator operation amount is small (the curve on the lower side is selected in FIG. 4), and a smaller engine revolution speed is obtained.

Note that, in the engine revolution speed map, a straight line passing through the origin represents a state in which the gear ratio is constant. The straight line indicated by Llow in FIG. 4 represents a low gear state in which the gear ratio of the electronically controlled continuously variable transmission 5 is the largest, the straight line indicated by Lhigh represents a high gear state in which the gear ratio of the electronically controlled continuously variable transmission 5 is the smallest, and the straight line indicated by Lmid represents an intermediate gear state therebetween. As is read from FIG. 4, in each of the curves in this example, the engine revolution speed is raised along the straight line Llow (low gear state) while the vehicle speed is small, the engine revolution speed is gently raised when the vehicle speed takes an intermediate value, and the engine revolution speed is raised along the straight line Lhigh (high gear state) when the vehicle speed is large.

The basic engine revolution speed obtained by the basic engine revolution speed calculation unit 11 and the final engine revolution speed obtained by the final engine revolution speed calculation unit 12 are passed to the target engine revolution speed calculation unit 13. The final engine revolution speed calculation unit 12 is a unit configured to calculate the final engine revolution speed that is a target value for the revolution speed of the crankshaft of the engine 4 to be finally arrived at. Further, the target engine revolution speed calculation unit 13 is a unit configured to calculate a target engine revolution speed that is a target value to be controlled as the revolution speed of the crankshaft of the engine 4. In this case, the target engine revolution speed is calculated as a control target value based on the basic engine revolution speed with reference to a target output and other information, to thereby enable prompt suppression of uncomfortable vibrations while achieving both fuel efficient running and acceleration responsiveness. The calculation processing by the final engine revolution speed calculation unit 12 and the target engine revolution speed calculation unit 13 is described in detail later.

The target gear ratio calculation unit 14 is a unit configured to calculate a target gear ratio that is a target value to be controlled as the gear ratio of the electronically controlled continuously variable transmission 5. In this case, the target gear ratio is a control target value for setting the revolution speed of the engine 4 to the target engine revolution speed. The target gear ratio calculation unit 14 calculates the target gear ratio based on the target engine revolution speed and the information relating to the vehicle speed. In this embodiment, the vehicle speed is used as the information relating to the vehicle speed. In this calculation, for example, the target engine revolution speed may be divided by a value obtained by dividing the vehicle speed by the perimeter of the rear wheel 8 and multiplying the same by the reduction ratio of the final reduction mechanism 7, to thereby obtain the target gear ratio. Note that, when the obtained target gear ratio exceeds or falls below the upper limit or the lower limit of the gear ratio of the electronically controlled continuously variable transmission 5, the target gear ratio calculation unit 14 may set the upper limit or the lower limit as the target gear ratio.

Next, the processing for obtaining the target throttle opening degree is described. The control device 10 includes an angle conversion unit 15, a target engine torque calculation unit 16, and a target throttle opening degree calculation unit 17 illustrated in FIG. 3. Further, the target engine torque calculation unit 16 includes a basic engine torque calculation unit 16A, a target output calculation unit 16B, and a reverse conversion unit 16C. The control device 10 repeatedly executes processing executed by those control blocks at a predefined cycle.

The angle conversion unit 15 is a unit configured to convert the accelerator operation amount detected by the accelerator sensor 21 into the throttle opening degree. The throttle opening degree obtained by the angle conversion unit 15 is herein referred to as "basic throttle opening degree". The basic throttle opening degree and the accelerator operation amount have a one-to-one relationship therebetween, and the accelerator operation amount is converted into the basic throttle opening degree by using an arbitrary conversion expression or referring to a table or a map. In this case, such a conversion that the basic throttle opening degree increases as the accelerator operation amount becomes larger is made.

The target engine torque calculation unit 16 is a unit configured to calculate the target engine torque, which corresponds to a target value of the engine torque to be controlled, based on information relating to the accelerator opening degree and the basic engine revolution speed. In this embodiment, the basic throttle opening degree is used as the information relating to the accelerator opening degree.

The basic engine torque calculation unit 16A calculates a basic engine torque based on the basic engine revolution speed and the basic throttle opening degree. For example, the basic engine torque calculation unit 16A calculates the basic engine torque by the following processing.

The memory 10c stores a map that shows a relationship between the throttle opening degree and the engine revolution speed, and the engine torque, which is determined by output characteristics of the engine 4 (this map is hereinafter referred to as "engine torque map") . The basic engine torque calculation unit 16A refers to the engine torque map to uniquely calculate the basic engine torque based on the basic throttle opening degree and the basic engine revolution speed. Note that, as described above, the basic engine revolution speed calculation unit 11 calculates the basic engine revolution speed based on the accelerator operation amount and the vehicle speed, and the angle conversion unit 15 converts the accelerator operation amount into the basic throttle opening degree. Therefore, the calculation based on the basic throttle opening degree and the basic engine revolution speed is eventually the calculation based on the accelerator operation amount and the vehicle speed. Therefore, the basic engine torque calculation unit 16A does not need to always determine the basic engine torque based on the basic engine revolution speed and the basic throttle opening degree as described above, and may determine the basic engine torque based on arbitrary information relating to the accelerator operation amount and arbitrary information relating to the vehicle speed.

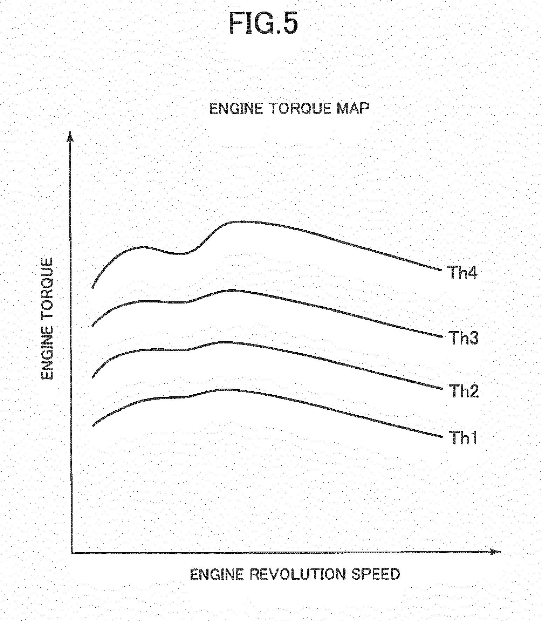

FIG. 5 is a graph showing an example of the engine torque map. The memory 10c stores data obtained by quantifying the map. In the engine torque map shown in FIG. 5, the horizontal axis represents an engine revolution speed, and the vertical axis represents engine torque. FIG. 5 exemplifies curves Th1 to Th4 that correspond to respective accelerator operation amounts . In this case, the curves Th1 to Th4 have correspondence to specific accelerator operation amounts. For example, the curve Th4 is selected under a specific state in which the accelerator operation amount is large, the curve Th1 is selected under a specific state in which the accelerator operation amount is small, and the curve Th2 or Th3 is selected under an intermediate state. Note that, a larger number of curves than those shown in FIG. 5 are actually prepared so as to support finer changes of the accelerator operation amount.

The basic engine torque calculation unit 16A refers to this engine torque map to calculate the basic engine torque corresponding to the basic throttle opening degree and the basic engine revolution speed. That is, when a curve corresponding to a certain accelerator operation amount, as an example, the curve Th4 is selected, the basic engine torque is determined based on the basic engine revolution speed at that time point.

The obtained basic engine torque is converted by the target output calculation unit 16B into an output to be transmitted to the rear wheel (this output is referred to as "target output") . The target output is restored to an engine torque again (this engine torque is referred to as "target engine torque") by the reverse conversion unit 16C at the further latter stage. The main reason for performing this conversion is because the final engine revolution speed calculation unit 12 requires the target output in the process of calculating the final engine revolution speed, and because the target engine torque is determined as an engine torque that enables the target output to be obtained.

That is, as described later, the target output can be determined based on the basic engine torque and the basic engine revolution speed, but when the target engine revolution speed to be actually used as the target value of the engine revolution speed differs from the basic engine revolution speed, the output to be transmitted to the rear wheel may differ from the target output. In view of this, the target output is once determined, and then the target engine torque is obtained based on the target engine revolution speed as the engine torque required for obtaining this target output. Thus, the same output as the target output is obtained.

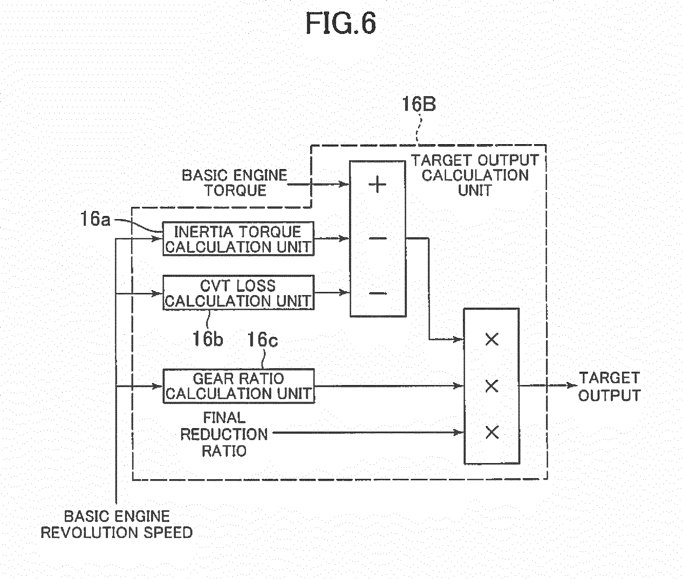

FIG. 6 is a diagram illustrating an example of a control block of the target output calculation unit 16B. As illustrated in FIG. 6, the target output calculation unit 16B obtains the target output as follows . The inertia torque of the engine, which is calculated by an inertia torque calculation unit 16a, and the torque to be lost in the electronically controlled continuously variable transmission 5, which is calculated by a CVT loss calculation unit 16b, are subtracted from the basic engine torque, and the result is multiplied by the gear ratio of the electronically controlled continuously variable transmission 5, which is calculated by a gear ratio calculation unit 16c, and the reduction ratio of the final reduction mechanism 7 (hereinafter referred to as "final reduction ratio") . In this case, the inertia torque of the engine is inertia torque generated due to change of the engine revolution speed, and is calculated by the inertia torque calculation unit 16a based on the temporal change of the basic engine revolution speed. Further, the torque to be lost in the electronically controlled continuously variable transmission 5 means a transmission loss in the electronically controlled continuously variable transmission 5, and is calculated by the CVT loss calculation unit 16b based on the basic engine revolution speed. Note that, in this case, the gear ratio of the electronically controlled continuously variable transmission 5 may be additionally considered. Further, the gear ratio of the electronically controlled continuously variable transmission 5 is calculated by the gear ratio calculation unit 16c based on the basic engine revolution speed and the information relating to the current vehicle speed. Note that, when the gear ratio calculated here exceeds or falls below the upper limit or the lower limit of the gear ratio of the electronically controlled continuously variable transmission 5, the gear ratio calculation unit 16c uses the upper limit or the lower limit as the gear ratio.

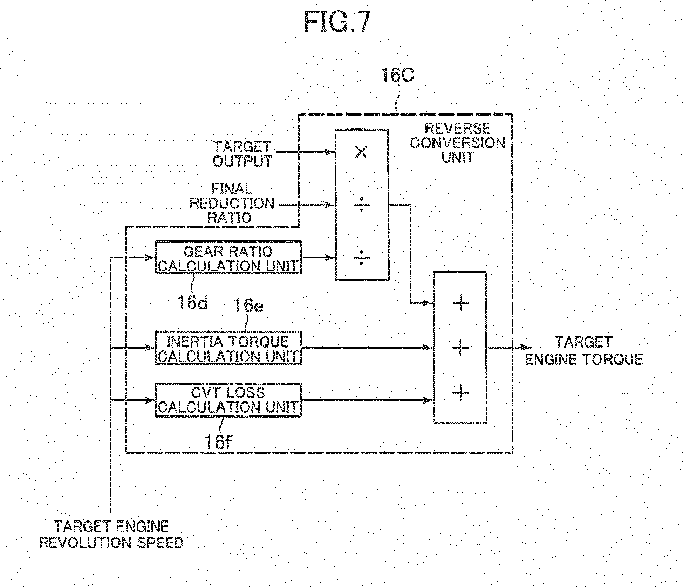

FIG. 7 is a diagram illustrating an example of a control block of the reverse conversion unit 16C. The reverse conversion unit 16C performs conversion reverse to that in the target output calculation unit 16B, and obtains the target engine torque as follows. The target output is divided by the final reduction ratio and the gear ratio calculated by a gear ratio calculation unit 16d, and the result is added to the inertia torque calculated by an inertia torque calculation unit 16e and the torque calculated by a CVT loss calculation unit 16f . In this case, as illustrated in FIG. 7, the gear ratio calculation unit 16d, the inertia torque calculation unit 16e, and the CVT loss calculation unit 16f each perform calculation based on the target engine revolution speed.

Referring back to FIG. 3, the obtained target engine torque is input to the target throttle opening degree calculation unit 17 together with the target engine revolution speed. Then, the target throttle opening degree calculation unit 17 calculates the target throttle opening degree based on the target engine torque and the target engine revolution speed. This calculation corresponds to conversion reverse to the calculation performed in the basic engine torque calculation unit 16A. That is, the target throttle opening degree calculation unit 17 refers again to the engine torque map shown in FIG. 5, and examines which throttle opening degree is represented by the curve on which the point on the map specified by the target engine torque and the target engine revolution speed is located, to thereby obtain the target throttle opening degree.

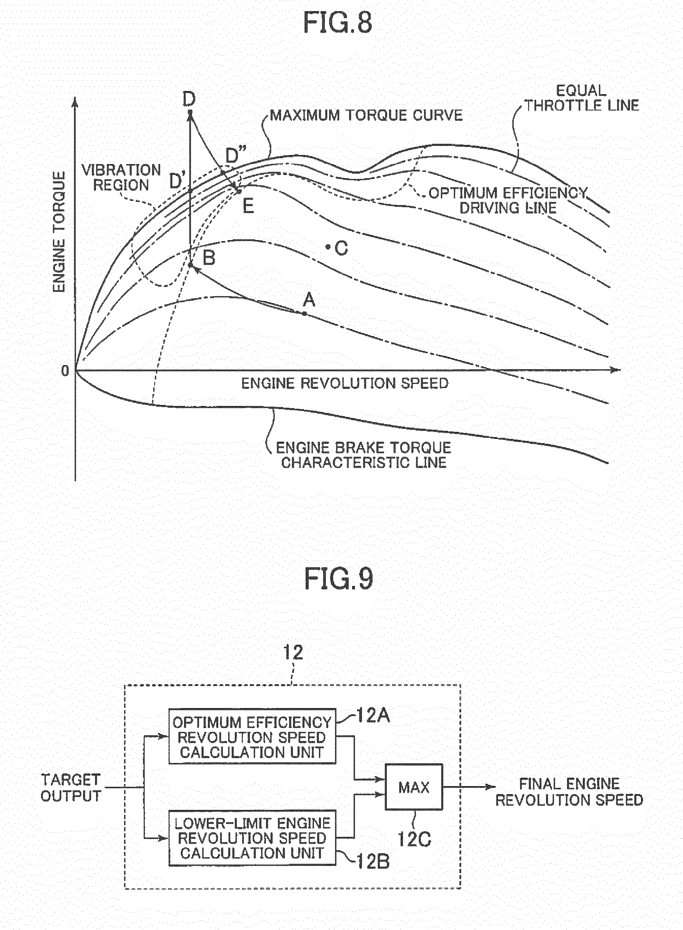

The straddled vehicle 1 according to this embodiment has the above-mentioned configuration, to thereby execute control capable of promptly suppressing the uncomfortable vibrations while achieving both the fuel efficient running and the acceleration responsiveness. Before describing the details of this control, first, the basic operation of the control when the straddled vehicle 1 performs the fuel efficient running is described with reference to FIG. 8.

FIG. 8 is a graph showing an example of the change in running state in the basic operation when the straddled vehicle 1 performs the fuel efficient running. In this graph, the horizontal axis represents an engine revolution speed, and the vertical axis represents an engine torque. In the graph, the solid line indicated on the positive side of the engine torque is a maximum torque curve, which represents an engine torque when the throttle valve is fully opened. On the other hand, the solid line indicated on the negative side of the engine torque is an engine brake torque characteristic line, which represents an engine torque (engine brake) when the throttle valve is fully closed. The running state of the actual straddled vehicle 1 is positioned somewhere in a region sandwiched between the maximum torque curve and the engine brake torque characteristic line. Further, the plurality of dot-and-dash lines indicated in the graph are each an equal throttle line, and when the opening degree of the throttle valve is constant, the running state of the straddled vehicle 1 is positioned somewhere on the same equal throttle line. Further, the broken line indicates an optimum efficiency driving line, which is a line obtained by connecting points with the best fuel efficiency among conditions capable of obtaining the same output. The optimum efficiency driving line has a meaning that the fuel efficiency is improved as the running state of the straddled vehicle 1 becomes closer to the optimum efficiency driving line, and the most fuel efficient running is performed on the optimum efficiency driving line.

For example, it is assumed that the running state of the straddled vehicle 1 is positioned at a point A in the graph. At this time, the above-mentioned basic engine revolution speed and basic engine torque match with the point A. In order for the straddled vehicle 1 to perform the fuel efficient running, a point B on the optimum efficiency driving line, which has an output equal to that at the point A, may be selected as the running state of the straddled vehicle 1. That is, the engine revolution speed is decreased and the throttle opening degree is increased, to thereby transition the running state from the point A to the point B as indicated by the arrow. Note that, the arrow in FIG. 8 is illustrated as an arrow extending along a line obtained by connecting points with an equal output (equal output line).

Subsequently, when the driver operates the accelerator for instruction of the acceleration, the basic engine revolution speed and the basic engine torque are set at a point C as an example. At this time, the engine revolution speed of the straddled vehicle 1 is not immediately changed, and hence the engine revolution speed is still equal to that at the point B. Therefore, in theory, the running state of the straddled vehicle 1 becomes a point D that is a point having an engine revolution speed equal to that at the point B and an output equal to that at the point C. The straddled vehicle 1 transitions the running state from the point D to a point E that is a point on the optimum efficiency driving line and having an output equal to that at the point D, as indicated by the arrow. However, an engine torque larger than the maximum torque curve at which the throttle valve is fully opened cannot be obtained, and hence the running state of the actual straddled vehicle 1 transitions from the point B to a point D' on the maximum torque curve, and then follows the maximum torque curve to transition to a point D'' as the engine revolution speed is increased. After that, the running state transitions to the point E on the optimum efficiency driving line.

When achievement of the fuel efficient running is merely required, the above-mentioned control may be performed, but simple execution of this control is insufficient as the control of the straddled vehicle 1. This is because the state on the optimum efficiency driving line is too low in engine revolution speed, and hence the acceleration responsiveness is extremely bad. In order to improve this state, it is conceivable to perform the fuel efficient running only during constant speed running, which has less fear of re- acceleration. Therefore, for example, when the driving state is transitioned to the optimum efficiency driving line, the transition may not be immediately performed, but may be slowly performed over time (in the example of FIG. 8, the transition from the point A to the point B may be slowly performed). However, when such control is performed, time is required next until the running state transitions from the point D' via the point D'' to reach the point E, and this path from the point D' to the point E corresponds to the driving state that causes uncomfortable vibrations (the range of this driving state that causes uncomfortable vibrations is indicated by the broken line as a vibration region in FIG. 8). Therefore, the uncomfortable vibrations are generated for a long period of time, which significantly disturbs the ride quality of the straddled vehicle 1.

In view of this, in the straddled vehicle 1 according to this embodiment, the control device 10 performs the above-mentioned fuel efficient running mainly through control by the final engine revolution speed calculation unit 12 and the target engine revolution speed calculation unit 13 illustrated in FIG. 3 so as not to disturb the drivability of the driver as much as possible so that the acceleration responsiveness is secured and the uncomfortable vibrations are suppressed as necessary.

FIG. 9 is a functional block diagram of the final engine revolution speed calculation unit 12. The final engine revolution speed calculation unit 12 calculates, in an optimum efficiency revolution speed calculation unit 12A, an optimum efficiency revolution speed that has the best fuel efficiency among the engine revolution speeds that may generate the target output passed from the target output calculation unit 16B (see FIG. 3). Simultaneously, a lower-limit engine revolution speed calculation unit 12B calculates a lower-limit engine revolution speed that is a lower limit value of the engine revolution speed determined for each target output.

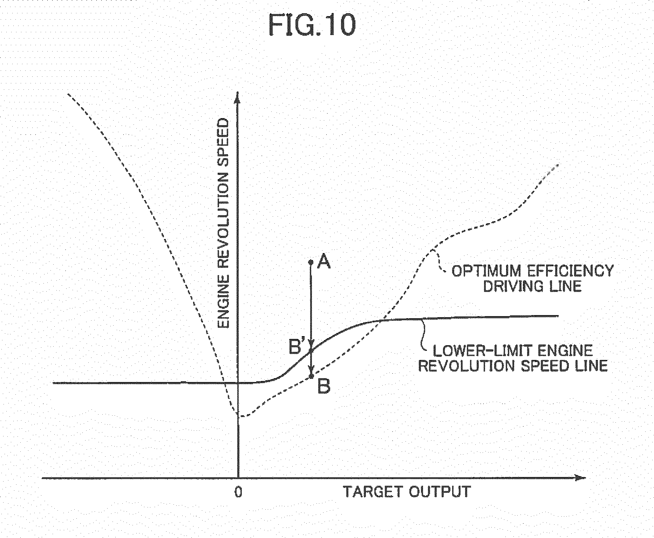

FIG. 10 is a diagram schematically illustrating a map referred to when the optimum efficiency revolution speed calculation unit 12A and the lower-limit engine revolution speed calculation unit 12B of the final engine revolution speed calculation unit 12 calculate the optimum efficiency revolution speed and the lower-limit engine revolution speed, respectively. FIG. 10 is represented as a graph in which the horizontal axis represents a target output and the vertical axis represents an engine revolution speed. In this graph, the optimum efficiency driving line of FIG. 8 appears as a shape as indicated by the broken line. The lower-limit engine revolution speed line is obtained by connecting the lower-limit engine revolution speeds of the respective target outputs. As an example, the lower-limit engine revolution speed line herein becomes the curve indicated by the solid line in FIG. 10. Note that, the lower-limit engine revolution speed is a lower limit value of the engine revolution speed determined based on the characteristics of the engine 4, for obtaining a stable output without stalling the engine 4, causing an unstable output, generating large vibrations, and the like. Note that, the lower-limit engine revolution speed may be determined in consideration of other conditions such as the acceleration responsiveness of the engine 4. The map illustrated in FIG. 10 is stored in the memory 10c of the control device 10.

The optimum efficiency revolution speed calculation unit 12A refers to the optimum efficiency driving line of FIG. 10, to thereby calculate the optimum efficiency revolution speed corresponding to a given target output. For example, when a point corresponding to the point A of FIG. 8 is indicated in FIG. 10 as the point A as well, the optimum efficiency revolution speed calculation unit 12A calculates, as the optimum efficiency revolution speed, the engine revolution speed at the point B that is a point on the optimum efficiency driving line, which has the same target output as the point A. Note that, the point B is a point corresponding to the point of FIG. 8. Further, the lower-limit engine revolution speed calculation unit 12B refers to the lower-limit engine revolution speed line of FIG. 10, and calculates the lower-limit engine revolution speed corresponding to the given target output. Regarding the point A, the lower-limit engine revolution speed calculation unit 12B calculates, as the lower-limit engine revolution speed, the engine revolution speed at a point B' that is a point on the lower-limit engine revolution speed line, which has the same target output as the point A.

A maximum value selection unit 12C selects a larger one of the optimum efficiency revolution speed and the lower-limit engine revolution speed, and outputs the selected value as the final engine revolution speed from the final engine revolution speed calculation unit 12.

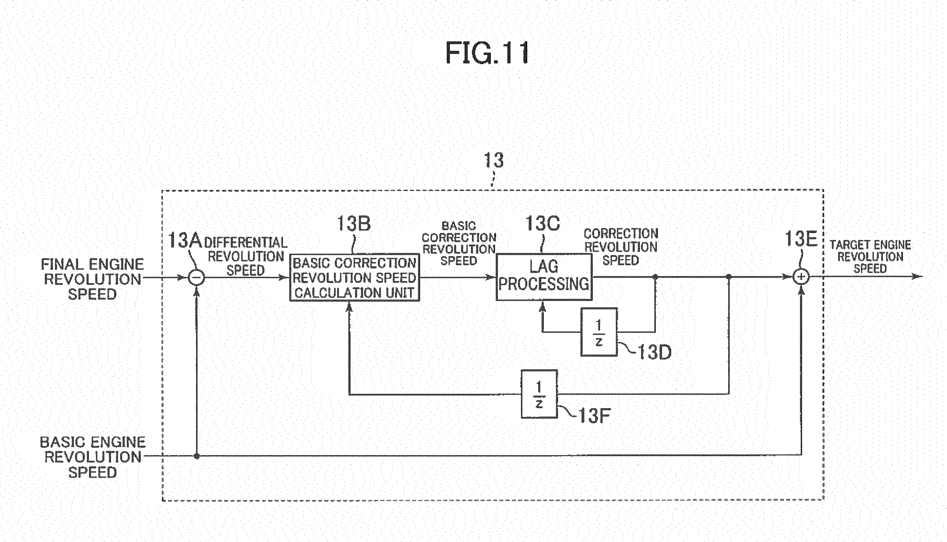

FIG. 11 is a functional block diagram of the target engine revolution speed calculation unit 13. The target engine revolution speed calculation unit 13 calculates, at a node 13A, a differential revolution speed that is a difference between the final engine revolution speed and the basic engine revolution speed. How to set the sign of this differential revolution speed is arbitrary, but in this embodiment, the basic revolution speed is subtracted from the final engine revolution speed, and the differential revolution speed is determined to be negative when the final engine revolution speed is smaller than the basic engine revolution speed. This case means that control is made to decrease the engine revolution speed from the basic engine revolution speed when the differential revolution speed is negative, and control is made to increase the engine revolution speed from the basic engine revolution speed when the differential revolution speed is positive.

The differential revolution speed is input to a basic correction revolution speed calculation unit 13B to be converted into a basic correction revolution speed. Depending on the running state of the straddled vehicle 1, there is a case where it is improper to directly use the differential revolution speed as the target value of the control. Therefore, the basic correction revolution speed calculation unit 13B is a unit configured to calculate, as a value replacing the differential revolution speed, the basic correction revolution speed that is the target value of the control based on the running state of the straddled vehicle 1. The basic correction revolution speed calculation unit 13B directly sets the differential revolution speed as the basic correction revolution speed depending on conditions. Details of the processing of the basic correction revolution speed calculation unit 13B are described later.

Subsequently, in lag processing 13C, a correction revolution speed is determined based on the basic correction revolution speed being the target value. The correction revolution speed is a value that follows the change in basic correction revolution speed with a lag. Therefore, the correction revolution speed obtained by the lag processing 13C is input again to the lag processing 13C via a delay element 13D, to thereby hold this value. Note that, this delay element 13D is an element appearing in the control block diagram for the sake of convenience because the control device 10 repeatedly executes the processing represented in the control block at a cycle set in advance as described above. The same holds true in a delay element 13F to be described later.

The correction revolution speed asymptotically approaches the basic correction revolution speed as the time elapses . At this time, the asymptotic approach of the correction revolution speed to the basic correction revolution speed, which is performed in the lag processing 13C, has a time constant that differs depending on the sign of the asymptotic approaching direction thereof. In this embodiment, the time constant in the direction in which the correction revolution speed is decreased (that is, the basic correction revolution speed is smaller than the correction revolution speed. In other words, a direction of decreasing the revolution speed of the engine 4) is larger than the time constant in the direction in which the correction revolution speed is increased, which is an opposite direction thereof (that is, the basic correction revolution speed is larger than the correction revolution speed. In other words, a direction of increasing the revolution speed of the engine 4). For example, the time constant in the direction in which the correction revolution speed is decreased is set to 2 seconds, and the time constant in the direction in which the correction revolution speed is increased is set to 0.2 seconds and the like. With this, the correction revolution speed is slowly changed in the decreasing direction, and is quickly changed in the increasing direction. Note that, the lag processing 13C uses a so-called first order lag as the lag, but the form of the lag is not particularly limited.

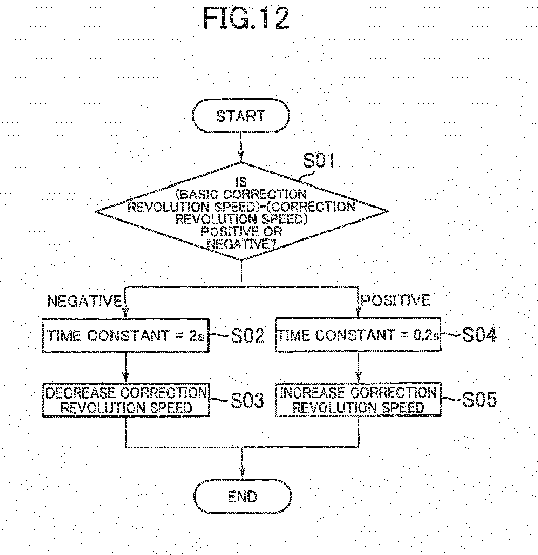

FIG. 12 is a flow chart of the control to be executed by the lag processing 13C. First, in Step S01, the difference between the basic correction revolution speed and the correction revolution speed (value output in the previously executed cycle) is calculated, to thereby determine the positive or negative sign thereof. When the difference is negative, that is, when the correction revolution speed is in the decreasing direction, the processing proceeds to Step S02 to set the time constant to a long time constant, specifically, 2 seconds. In subsequent Step S03, the correction revolution speed is decreased by a necessary amount based on this time constant. When the difference in Step S01 is positive, the processing proceeds to Step S04 to set the time constant to a short time constant, specifically, 0.2 seconds. In subsequent Step S05, the correction revolution speed is increased by a necessary amount based on this time constant.

The obtained correction revolution speed is added to the basic engine revolution speed at a node 13E to be output as the target engine revolution speed. That is, the correction revolution speed is a correction amount for the basic engine revolution speed. Further, the basic correction revolution speed is the target value for the asymptotic approach of the correction revolution speed. That is, when a time period sufficiently longer than the time constant set in the lag processing 13C elapses, the correction revolution speed matches with the basic correction revolution speed.

Further, as illustrated in FIG. 11, the correction revolution speed obtained by the lag processing 13C is returned to the basic correction revolution speed calculation unit 13B via the delay element 13F. Therefore, the differential revolution speed calculated at the present executing cycle and the correction revolution speed output at the previously executed cycle are input to the basic correction revolution speed calculation unit 13B.

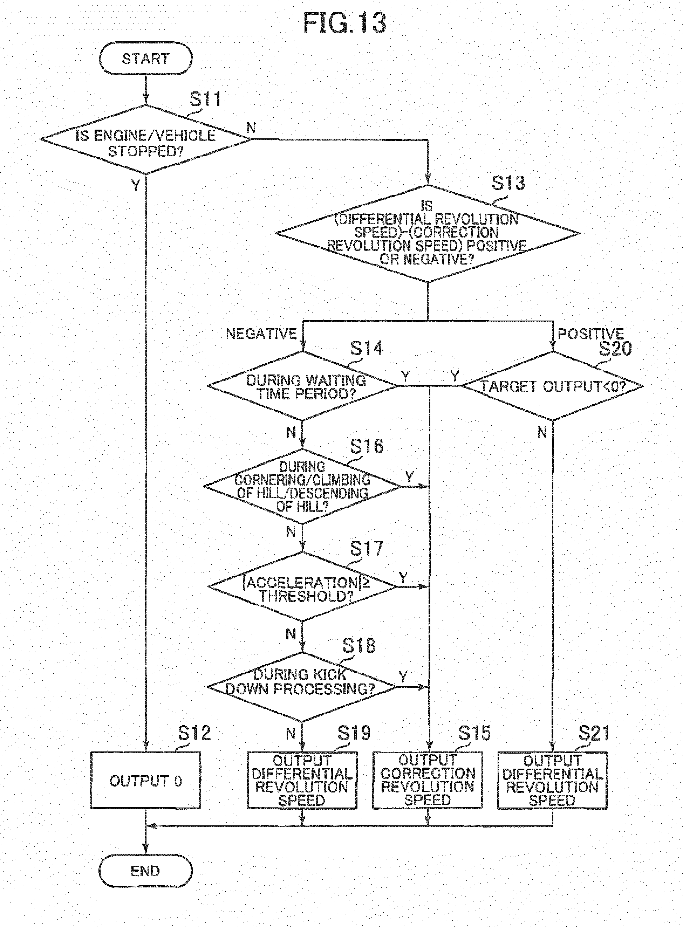

FIG. 13 is a flow chart of the control to be executed by the basic correction revolution speed calculation unit 13B. First, in Step S11, it is determined whether or not the engine is stopped or the vehicle is stopped. This determination is made by referring to the outputs of the engine revolution speed sensor 24 and the vehicle speed sensor 27 (see FIG. 2 for both of them) . When the engine 4 is stopped or the straddled vehicle 1 is stopped, the processing proceeds to Step S12 so that the basic correction revolution speed calculation unit 13B outputs 0 as the basic correction revolution speed. Step S12 has a meaning to cause the target engine revolution speed to asymptotically approach the basic engine revolution speed.

When the engine 4 is rotating and the straddled vehicle 1 is running, the processing proceeds to Step S13 to determine the positive or negative sign of the difference between the differential revolution speed and the correction revolution speed. When this difference is negative, it means that the differential revolution speed calculated at the node 13A is a differential revolution speed for decreasing the current engine revolution speed. On the other hand, when this difference is positive, the differential revolution speed is a differential revolution speed for increasing the current engine revolution speed.

When the determination result of Step S13 is negative, the processing proceeds to Step S14 to determine whether or not the current time corresponds to a waiting time period. The waiting time period refers to a time period for decreasing the engine revolution speed after waiting for an elapse of a predetermined waiting time period instead of immediately decreasing the engine revolution speed when the difference between the differential revolution speed and the correction revolution speed becomes negative in Step S13. When it is determined in Step S14 that the current time corresponds to the waiting time period, that is, the waiting time period has not elapsed yet, the processing proceeds to Step S15 to output the correction revolution speed output at the previously executed cycle as the basic correction revolution speed. Step S15 has a meaning to maintain the correction revolution speed without a change. The waiting time period is 5 seconds in the example of this embodiment.

When the waiting time period elapses, the processing sequentially proceeds from Step S14 to subsequent Step S16, Step S17, and Step S18. Based on each of the results of the determinations on conditions relating to the running state of the straddled vehicle 1, the processing is branched to proceed to Step S15 for maintaining the correction revolution speed without a change or to proceed to Step S19 for outputting the differential revolution speed as the basic correction revolution speed. Step S19 has a meaning to decrease the current engine revolution speed so as to asymptotically approach the final engine revolution speed.

The condition determinations in Step S16 to Step S18 have a meaning that, when the running state of the straddled vehicle 1 is a state improper for further decreasing the engine revolution speed, the decrease of the engine revolution speed is suspended. As described above, when the engine revolution speed is decreased, the response at the time of re-acceleration is delayed. Therefore, the condition determinations in Step S16 to Step S18 are condition determinations for extracting the case where it is expected that the re-acceleration is almost performed or the re-acceleration is performed at present.

In Step S16, it is determined whether or not the straddled vehicle 1 is cornering, climbing a hill, or descending a hill. Whether the straddled vehicle 1 is cornering can be identified by detecting the revolution speed difference between the front and rear wheels or detecting the attitude of the vehicle body when the straddled vehicle 1 is a motorcycle, and further by detecting the steering angle when the straddled vehicle 1 is a buggy such as anATV. Whether the straddled vehicle 1 is climbing or descending a hill can be identified by examining the magnitude of the acceleration with respect to the running load, or detecting the attitude of the vehicle body.

In Step S17, it is determined whether or not the absolute value of the acceleration of the straddled vehicle 1 is equal to or larger than a predetermined threshold. The reason of the determination is as follows. When the acceleration is large, it is presumed that the straddled vehicle 1 is accelerating. When the engine revolution speed is decreased, that is, the gear ratio is decreased in this state, the response at the time of acceleration is further delayed. Further, when the acceleration is negative, it is predicted that the engine brake is acting. It is conceived that decreasing the gear ratio also in this case is not preferred because the decrease is in a direction to weaken the action of the engine brake.

In Step S18, it is determined whether or not processing of temporary increasing the gear ratio is performed due to a so-called kick down. This determination is made because decreasing the engine revolution speed and the gear ratio during the kick down obviously inhibits the effect of the kick down.

The above determinations in Step S16 to Step S18 are examples employed in this embodiment, and not all of those determinations are required to be employed or another condition may be further employed. Further, those condition determinations may be performed in random order.

On the other hand, when the determination result of Step S13 is positive, the processing proceeds to Step S20 to determine whether or not the target output is negative. When the target output is negative, the processing proceeds to Step S15 to maintain the current engine revolution speed. On the other hand, when the target output is 0 or positive, the processing proceeds to Step S21 to output the differential revolution speed as the basic correction revolution speed. Step S21 has a meaning to increase the current engine revolution speed so as to asymptotically approach the final engine revolution speed.

The determination in Step S20 is not essential, and Step S21 may be executed directly from Step S13. However, the determination in Step S20 has a meaning to determine whether or not the straddled vehicle 1 is using the engine brake. That is, as the driving state, for example, during descending of a hill, there is assumed a case where an operation of releasing the accelerator is performed to use the engine brake. At this time, the accelerator opening degree is temporarily decreased, and hence as is apparent from the engine revolution speed map illustrated in FIG. 4, the basic engine revolution speed is changed to a small value. As a result, the differential revolution speed is increased. When Step S21 is executed at this time, the correction revolution speed promptly asymptotically approaches the increased differential revolution speed. This state simultaneously has a meaning to reset the correction revolution speed, which has been decreased over time by the waiting time period (Step S14) and the lag processing with a large time constant (Step S02 and Step S03 in FIG. 12), to a large value.

However, the state of using the engine brake as described above is a state for achieving extremely fuel efficient running depending on cases, such as entire cut of fuel supply. When such a state occurs, resetting the correction revolution speed, which has been a value suitable for the fuel efficient running, cannot be said to be beneficial. In view of this, in this embodiment, with Step S20, only when the engine brake is acting, the correction revolution speed is not reset but maintained at the current value without a change, to thereby maintain a fuel efficient state even when the accelerator is opened again.

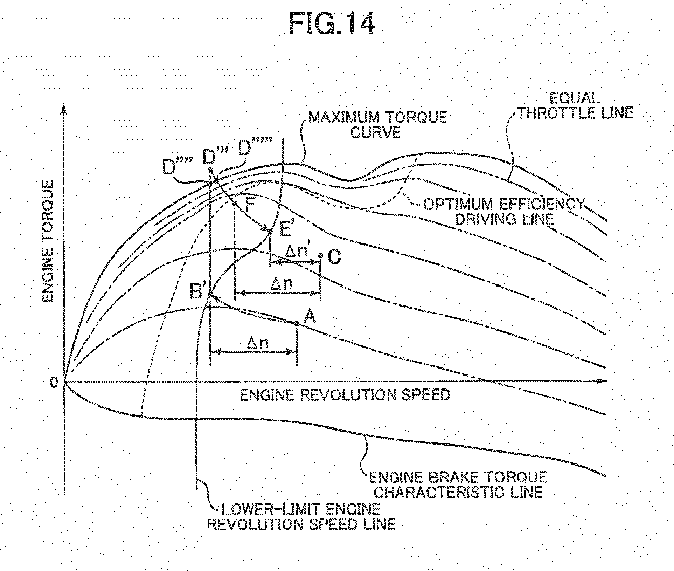

Now, the operation of the above-mentioned straddled vehicle 1 is described with a specific exemplification. FIG. 14 is a graph showing an example of a change in running state of the straddled vehicle 1. First, it is assumed that the running state of the straddled vehicle 1 is positioned at the point A in FIG. 14, and the basic engine revolution speed and the basic engine torque match with the point A. Note that, the point A indicated in FIG. 14 is the same point as the point A indicated in FIG. 8.

At this time, the final engine revolution speed calculation unit 12 outputs, as the final engine revolution speed, the engine revolution speed at the point B' on the lower-limit engine revolution speed line, which has an output equal to that at the point A, as described with reference to FIG. 10. Note that, in FIG. 14, the lower-limit engine revolution speed line of FIG. 10 is indicated.

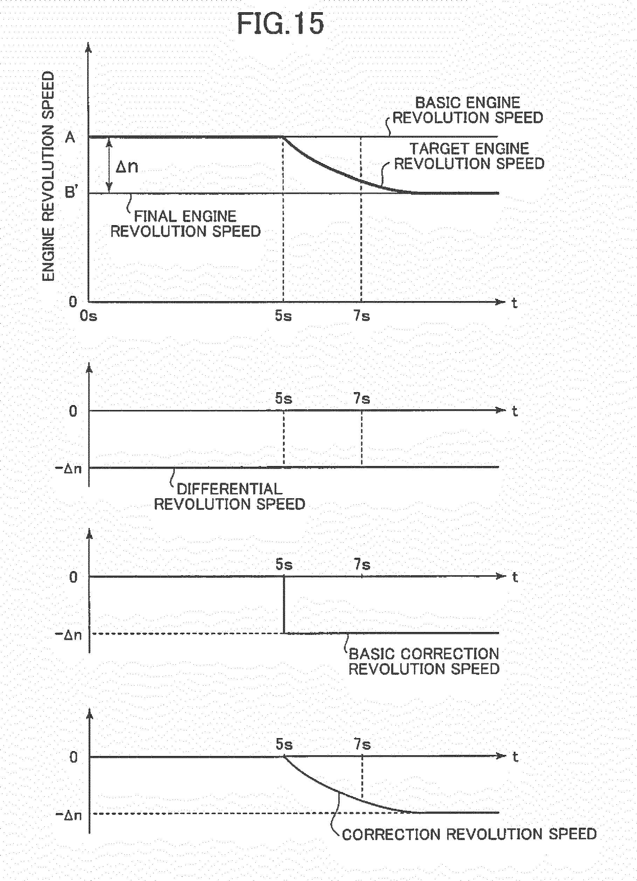

The temporal changes of the basic engine revolution speed, the final engine revolution speed, the target engine revolution speed, the differential revolution speed, the basic correction revolution speed, and the correction revolution speed during transition of the running state of the straddled vehicle 1 from the point A to the point B' at this time are shown in FIG. 15. In the graph shown in FIG. 15, the horizontal axis represents time t [s], and the vertical axis represents an engine revolution speed.

In the uppermost graph in FIG. 15, the basic engine revolution speed, the final engine revolution speed, and the target engine revolution speed are plotted. As shown in FIG. 15, the basic engine revolution speed and the final engine revolution speed are engine revolution speeds at the point A and the point B' of FIG. 14, respectively, and are constant regardless of time. The difference between the basic engine revolution speed and the final engine revolution speed is represented by Δn.

The second graph in FIG. 15 represents the differential revolution speed. The differential revolution speed is obtained by subtracting the basic engine revolution speed from the final engine revolution speed, and hence is represented by -Δn.

The third graph in FIG. 15 represents the basic correction revolution speed. As described with reference to FIG. 15, the basic correction revolution speed is the correction revolution speed until the waiting time period, specifically, 5 seconds elapse, and hence the basic correction revolution speed is 0, which is the initial value of the correction revolution speed, for 5 seconds. After the waiting time period elapses, the differential revolution speed becomes the basic correction revolution speed, which is -Δn.

The lowermost graph in FIG. 15 represents the correction revolution speed. In the example shown here, the basic correction revolution speed is in a direction of decreasing the correction revolution speed, that is, direction of decreasing the target engine revolution speed, and hence the correction revolution speed follows the change of the basic correction revolution speed with the first order lag having the time constant of 2 seconds. As a result, the correction revolution speed is gently decreased toward -Δn from a time point after the elapse of 5 seconds from the start. In this example, at the time point of 7 seconds, the correction revolution speed is decreased to about 63% of -Δn.

Then, the target engine revolution speed output from the target engine revolution speed calculation unit 13 is obtained by adding the correction revolution speed to the basic engine revolution speed, and hence as indicated by the thick line in the uppermost graph in FIG. 15, the target engine revolution speed that is initially equal to the basic engine revolution speed is gently decreased from the time point after the elapse of 5 seconds, to thereby reach the final engine revolution speed, that is, the point B' of FIG. 14.

Subsequently, referring back to FIG. 14, it is assumed that, under a state in which the running state of the straddled vehicle 1 is positioned at the point B', the driver opens the accelerator, and the basic engine revolution speed and the basic engine torque move to the point C in FIG. 14. At this time, the running state of the straddled vehicle 1 momentarily and virtually transitions to a point D''' having an engine revolution speed equal to that at the point B' and an output equal to that at the point C, and then transitions along the equal output line to reach a point E' on the lower-limit engine revolution speed line, which has an output equal to that at the point C. The actual straddled vehicle 1 transitions from the point B' via a point D'''' and a point D""' to the point E'.

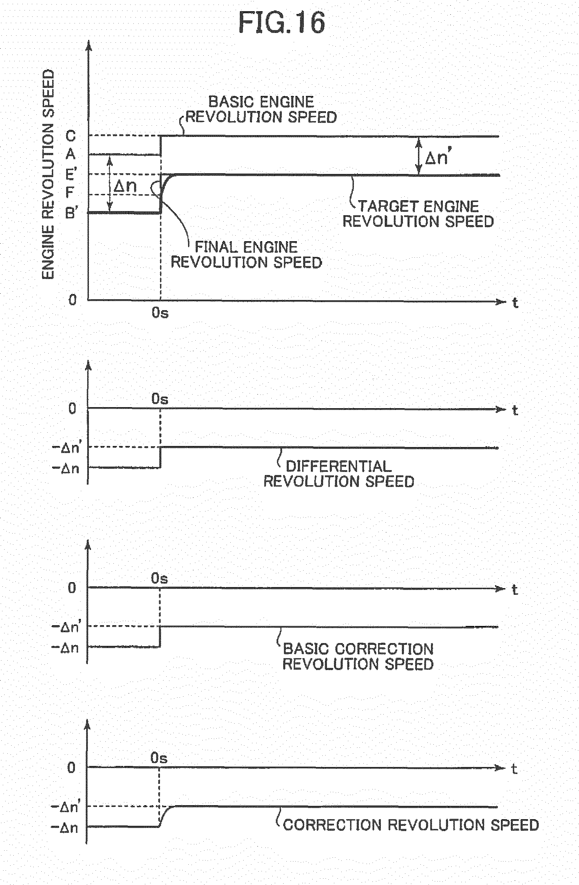

FIG. 16 is a graph showing temporal changes of the basic engine revolution speed, the final engine revolution speed, the target engine revolution speed, the differential revolution speed, the basic correction revolution speed, and the correction revolution speed during transition of the running state of the straddled vehicle 1 from the point B' to the point E'. In FIG. 16, the time at which the basic engine revolution speed and the basic engine torque transition from the point A to the point C is represented as 0 seconds.

As shown in the uppermost graph in FIG. 16, the basic engine revolution speed and the final engine revolution speed transition to the engine revolution speeds at the point C and the point E' , respectively, at the time point of 0 seconds. Along therewith, as shown in the second graph in FIG. 16, the differential revolution speed is changed to -Δn', which is a negative number of a difference Δn' between the revolution speeds at the point C and the point E'.

Then, this revolution speed -Δn' is larger than the correction revolution speed -Δn at the time point of 0 seconds, and hence, as shown in the third graph in FIG. 16, the basic correction revolution speed is also immediately changed to -Δn' , which is equal to the differential revolution speed.

At this time, the basic correction revolution speed is in a direction of increasing the correction revolution speed, that is, direction of increasing the target engine revolution speed, and hence the correction revolution speed follows the change of the basic correction revolution speed with the first order lag having the time constant of 0.2 seconds. As a result, as shown in the lowermost graph in FIG. 16, the correction revolution speed is promptly increased toward -Δn' from the time point of 0 seconds.

Then, the target engine revolution speed is changed as shown in the uppermost graph in FIG. 16. That is, at the stage of 0 seconds, the basic engine revolution speed is changed, but the correction revolution speed does not follow the momentary change, and hence the target engine revolution speed is changed by the same amount as the change of the basic engine revolution speed while maintaining the difference of -Δn, which is the correction revolution speed at the time point of 0 seconds, to thereby become the revolution speed indicated by F in FIG. 16. This point F is, as indicated in FIG. 14, a point having a difference in engine revolution speed by Δn from the point C and having an output equal to that at the point C. Subsequently, along with the prompt change of the correction revolution speed, the target engine revolution speed is also promptly changed to asymptotically approach the final engine revolution speed.

Referring back to FIG. 14, as described above, in the straddled vehicle 1 according to this embodiment, the running state is changed from the point A to the point B' in FIG. 14 slowly by the large time constant after the elapse of the waiting time period, whereas the running state is changed from the point B' to the point E' promptly by the small time constant. With this, the acceleration responsiveness is prevented from being disturbed through easy decrease of the engine revolution speed during running. Further, at the time of re-acceleration, the engine revolution speed is promptly increased so that the driving time period in a state in which the uncomfortable vibrations are generated is shortened, to thereby suppress the generation of the uncomfortable vibrations.

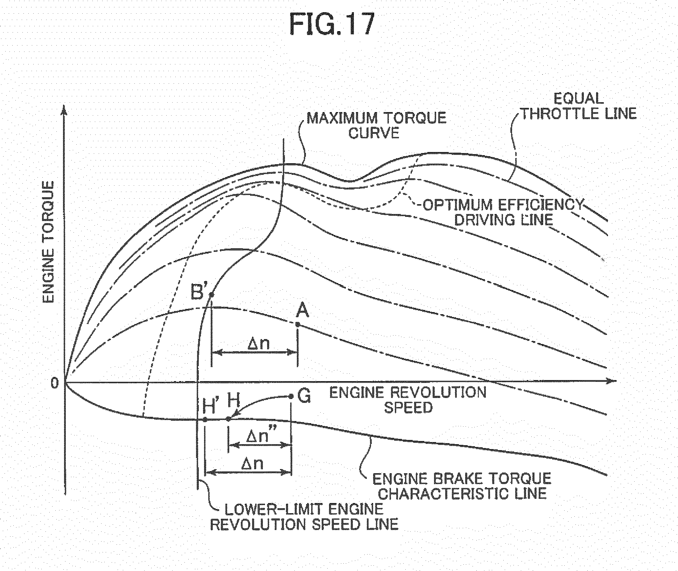

Subsequently, with reference to FIG. 17, the operation of the straddled vehicle 1 when the engine brake is used at the point B' in FIG. 14 is described with a specific exemplification. FIG. 17 is a graph showing an example of the change in running state of the straddled vehicle 1 during use of the engine brake. First, it is assumed that the running state of the straddled vehicle 1 is positioned at the point B' in FIG. 17, and the basic engine revolution speed and the basic engine torque match with the point A. Note that, the point A and the point B' indicated in FIG. 17 are the same points as those indicated in FIG. 14.

Then, it is assumed that the driver releases the accelerator at the time point of 0 seconds, and the basic engine revolution speed and the basic engine torque are changed to a point G. The point G represents a state in which the engine brake acts because the engine torque takes a negative value and the target output is negative. The final engine revolution speed for the point G is an engine revolution speed at a point H, which is a point on the optimum efficiency driving line and having an output equal to that at the point G. Note that, the optimum efficiency driving line matches with the engine brake torque characteristic line after the engine torque is decreased to intersect with the engine brake torque characteristic line.

At this time, the difference between the engine revolution speeds at the point G and the point H is Δn'', and the absolute value thereof is smaller than the difference Δn between the engine revolution speeds at the point A and the point B'. Therefore, unless exceptional processing is performed during the action of the engine brake, the correction revolution speed is promptly increased from -Δn to -Δn", and the driving state of the straddled vehicle is changed from the point B' to the point H. As a result, the engine revolution speed may be increased.

However, in this embodiment, when the target output is negative in Step S20 of FIG. 13, control of maintaining the correction revolution speed is performed. As a result, the correction revolution speed is maintained to -Δn, and the running state of the straddled vehicle 1 is changed to a point H' on the engine brake characteristic line, which has an engine revolution speed lower by Δn from the point G.

When the driver opens the accelerator again in this state so that the basic engine revolution speed is restored to the state at the position of the point A, because the correction revolution speed is maintained to -Δn, the state of the straddled vehicle 1 is immediately restored to the point B', and thus the state of the fuel efficient running before the use of the engine brake is maintained.

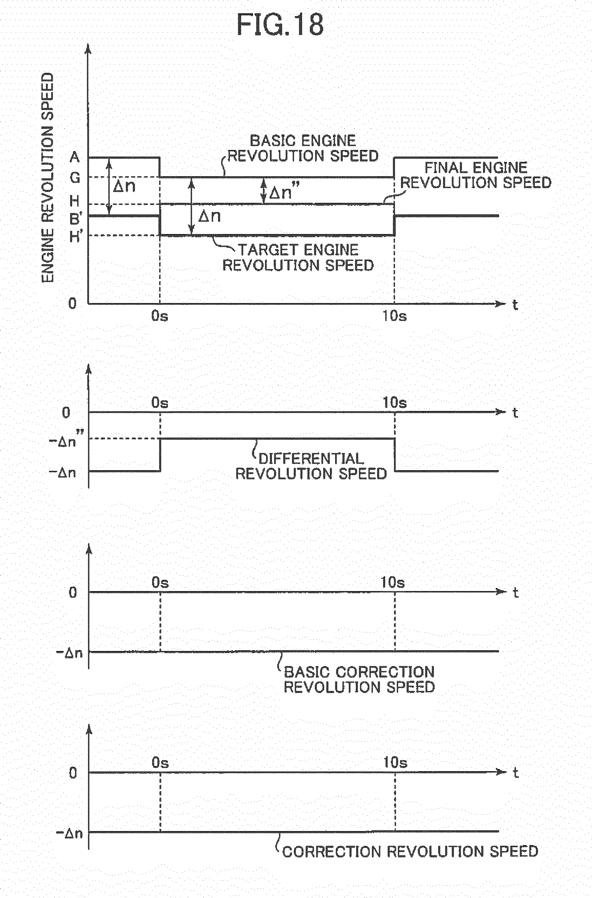

The temporal changes of the basic engine revolution speed, the final engine revolution speed, the target engine revolution speed, the differential revolution speed, the basic correction revolution speed, and the correction revolution speed in the above-mentioned state change are shown in FIG. 18. In this case, it is assumed that the accelerator is released at the time point of 0 seconds, and the accelerator is opened again at the time point of 10 seconds.

As shown in the uppermost graph in FIG. 18, at the time point of 0 seconds, the basic engine revolution speed is decreased from A to G, and the final engine revolution speed is increased from B' to H. Along therewith, as shown in the second graph in FIG. 18, the differential revolution speed is increased from -Δn to -Δn''.

However, as shown in the third graph in FIG. 18, there is no change in the basic correction revolution speed, and the basic correction revolution speed is maintained to -Δn. Therefore, the correction revolution speed is also not changed from -Δn as shown in the fourth graph. As a result, as shown in the uppermost graph in FIG. 18, the target engine revolution speed becomes H', which is a value smaller by Δn from the basic engine revolution speed.

Then, when the basic engine revolution speed returns to A at the time point of 10 seconds, the differential revolution speed returns to -Δn, and the target engine revolution speed is restored to B' as well.

As described above, in this embodiment, the correction revolution speed, which is a difference with respect to the basic engine revolution speed for calculating the target engine revolution speed, is held, and hence the correction revolution speed can be maintained even when the basic engine revolution speed is changed under special conditions such as during action of the engine brake. Further, as described with reference to FIG. 15 and FIG. 17, the lag processing is performed on the correction revolution speed, and hence when only the basic engine revolution speed is changed without the change of the correction revolution speed, the target engine revolution speed is changed to rapidly follow the change of the basic engine revolution speed. Further, the increase and decrease of the correction revolution speed more accurately represent whether the correction on the basic engine revolution speed is a correction in the direction of achieving the fuel efficient running or a correction in the direction of improving the acceleration responsiveness. Further, the time constant of the lag processing differs depending on the direction of the increase or decrease of the correction revolution speed. Therefore, as compared to the case where the time constant of the lag processing differs depending on the direction of the increase or decrease of the target engine revolution speed, control of slowly performing the change in the direction of achieving the fuel efficient running and rapidly performing the change in the direction of improving the acceleration responsiveness is more accurately performed.

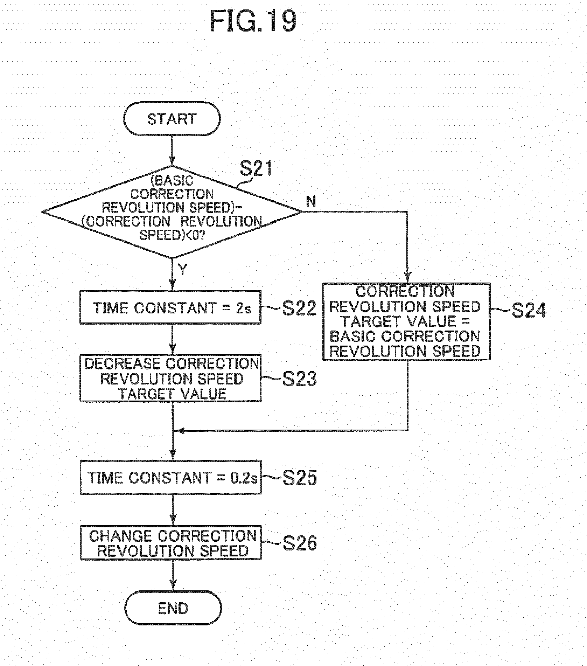

FIG. 19 is a flow chart of control to be executed by a modified example of the lag processing 13C illustrated in FIG. 12. In the lag processing 13C, there is a large difference in the time constant of the lag processing between the case where the correction revolution speed is increased and the case where the correction revolution speed is decreased, and hence processing as illustrated in FIG. 19 may be performed.

That is, the difference between the basic correction revolution speed and the correction revolution speed (value output at the previously executed cycle) is calculated in Step S21. When the difference is negative, the processing proceeds to Step S22 and Step S23 to set a long time constant, specifically, 2 seconds and decrease a correction revolution speed target value by a necessary amount so as to asymptotically approach the basic correction revolution speed.

When it is determined that the difference is positive in Step S21, the processing proceeds to Step S24 to set the correction revolution speed target value to the basic correction revolution speed.

After the processing of Step S23 or Step S24 is ended, the processing proceeds to Step S25 and Step S26 to set a short time constant, specifically, 0.2 seconds and change the correction revolution speed by a necessary amount so as to asymptotically approach the correction revolution speed target value.

As described above, when the correction revolution speed is decreased, the correction revolution speed target value is caused to asymptotically approach the basic correction revolution speed with a long time constant, and when the correction revolution speed is increased, the correction revolution speed target value is immediately set to the basic correction revolution speed so that the correction revolution speed is caused to asymptotically approach the correction revolution speed target value with a short time constant. Even in this case, the correction revolution speed slowly asymptotically approaches the basic correction revolution speed in the decreasing direction, and promptly asymptotically approaches the basic correction revolution speed in the increasing direction.

## Claims

1. A straddled vehicle, comprising:
an electronically controlled continuously variable transmission (5);
a target output calculation unit (16B) being configured to calculate a target output based on information relating to an accelerator operation amount and information relating to a vehicle speed;
a basic engine revolution speed calculation unit (11) being configured to calculate a basic engine revolution speed based on the information relating to the vehicle speed;
a target engine revolution speed calculation unit (13) being configured to calculate a target engine revolution speed by adding a correction revolution speed to the basic engine revolution speed, holding the correction revolution speed, and performing lag processing on a change in the correction revolution speed; and
a target gear ratio calculation unit (14) being configured to calculate a target gear ratio of the electronically controlled continuously variable transmission (5) based on the target engine revolution speed.

2. A straddled vehicle according to claim 1, wherein the target engine revolution speed calculation unit (13) is configured to use a time constant of lag processing for decreasing the correction revolution speed is smaller than a time constant of lag processing for increasing the correction revolution speed.

3. A straddled vehicle according to claim 1 or 2, further comprising a final engine revolution speed calculation unit (12) being configured to calculate a final engine revolution speed based on the target output,
wherein the target engine revolution speed calculation unit (13) is configured to perform lag processing for causing the correction revolution speed to asymptotically approach a basic correction revolution speed that is determined based on a differential revolution speed that is a difference between the final engine revolution speed and the basic engine revolution speed.

4. A straddled vehicle according to any one of claims 1 to 3, wherein the target engine revolution speed calculation unit (13) is configured to maintain the correction revolution speed without a change when a predetermined condition relating to a running state of the straddled vehicle is satisfied.

5. A straddled vehicle according to claim 4, wherein the predetermined condition relating to the running state of the straddled vehicle comprises at least one of a case where the straddled vehicle is cornering, a case where the straddled vehicle is climbing a hill, a case where the straddled vehicle is descending a hill, a case where an absolute value of an acceleration of the straddled vehicle is equal to or larger than an acceleration determining value, a case where a kick down operation is performed on the straddled vehicle, or a case where an engine brake is used.

6. A straddled vehicle according to any one of claims 1 to 5, wherein the target engine revolution speed calculation unit (13) is configured to execute the lag processing after waiting for an elapse of a predetermined waiting time period when performing lag processing for decreasing the correction revolution speed.

7. A straddled vehicle according to any one of claims 1 to 6, further comprising:
an electronically controlled throttle valve; and
a target throttle opening degree calculation unit (17) being configured to calculate a target throttle opening degree of the electronically controlled throttle valve based on the target output and the target engine revolution speed.

8. A method of controlling a straddled vehicle, the method comprising the steps of:
calculating a target output based on information relating to an accelerator operation amount and information relating to a vehicle speed;
calculating a basic engine revolution speed based on the information relating to the vehicle speed;
calculating a final engine revolution speed based on the target output;
calculating a target engine revolution speed by adding a correction revolution speed to the basic engine revolution speed;
holding the correction revolution speed and performing lag processing on a change in the correction revolution speed; and
calculating a target gear ratio of an electronically controlled continuously variable transmission (5) based on the target engine revolution speed.

9. A method of controlling a straddled vehicle according to claim 8, wherein, in the lag processing, a time constant used when the correction revolution speed is decreased is smaller than a time constant used when the correction revolution speed is increased.

10. A method of controlling a straddled vehicle according to claim 8 or 9, further comprising a step of calculating a final engine revolution speed based on the target output,
wherein the lag processing comprises processing of causing the correction revolution speed to asymptotically approach a basic correction revolution speed that is determined based on a differential revolution speed that is a difference between the final engine revolution speed and the basic engine revolution speed.

11. A method of controlling a straddled vehicle according to any one of claims 8 to 10, further comprising a step of maintaining the correction revolution speed without a change when a predetermined condition relating to a running state of the straddled vehicle is satisfied.

12. A method of controlling a straddled vehicle according to claim 11, wherein the predetermined condition relating to the running state of the straddled vehicle comprises at least one of a case where the straddled vehicle is cornering, a case where the straddled vehicle is climbing a hill, a case where the straddled vehicle is descending a hill, a case where an absolute value of an acceleration of the straddled vehicle is equal to or larger than an acceleration determining value, a case where a kick down operation is performed on the straddled vehicle, or a case where an engine brake is used.

13. A method of controlling a straddled vehicle according to any one of claims 8 to 12, further comprising a step of, when performing lag processing for decreasing the correction revolution speed, executing the lag processing after waiting for an elapse of a predetermined waiting time period.

14. A method of controlling a straddled vehicle according to any one of claims 8 to 13, further comprising a step of calculating a target throttle opening degree of an electronically controlled throttle valve based on the target output and the target engine revolution speed.

## Patentansprüche

1. Ein Spreiz-Sitz-Fahrzeug, das umfasst:
ein elektronisch gesteuertes kontinuierlich-variables Getriebe (5);
eine Ziel-Ausgabe-Berechnungs-Einheit (16B), die konfiguriert ist, um eine Ziel-Ausgabe basierend auf Informationen bezüglich eines Beschleuniger-Betätigungs-Betrags und Informationen bezüglich einer Fahrzeug-Geschwindigkeit zu berechnen;
eine Basis-Motor-Drehzahl-Berechnungs-Einheit (11), die konfiguriert ist, um eine Basis-Motor-Drehzahl basierend auf Informationen bezüglich der Fahrzeug-Geschwindigkeit zu berechnen;
eine Ziel-Motor-Drehzahl-Berechnungs-Einheit (13), die konfiguriert ist, um eine Ziel-Motor-Drehzahl zu berechnen, durch addieren einer Korrektur-Drehzahl zu der Basis-Motordrehzahl, halten der Korrektur-Drehzahl, und durchführen einer Verzögerungs-Verarbeitung bei einer Änderung der Korrektur-Drehzahl; und
eine Ziel-Übersetzung-Berechnungs-Einheit (14), die konfiguriert ist, um eine Ziel-Übersetzung des elektronisch gesteuerten kontinuierlich-variablen Getriebes (5) basierend auf der Ziel-Motor-Drehzahl zu berechnen.

2. Ein Spreiz-Sitz-Fahrzeug gemäß Anspruch 1, wobei die Ziel-Motor-Drehzahl-Berechnungs-Einheit (13) konfiguriert ist, dass eine Zeit-Konstante der Verzögerungs-Verarbeitung zum Verringern der Korrektur-Drehzahl kleiner ist als eine Zeit-Konstante der Verzögerungs-Verarbeitung zum Erhöhen der Korrektur-Drehzahl.

3. Ein Spreiz-Sitz-Fahrzeug gemäß Anspruch 1 oder 2, das weiterhin umfasst eine End-Motor-Drehzahl-Berechnungs-Einheit (12), die konfiguriert ist, um eine End-Motor-Drehzahl basierend auf der Ziel-Ausgabe berechnet,
wobei die Ziel-Motor-Drehzahl-Berechnungs-Einheit (13) konfiguriert ist, um eine Verzögerungs-Verarbeitung durchzuführen, um zu bewirken, dass sich die Korrektur-Drehzahl asymptotisch einer Basis-Korrektur-Drehzahl annähert, die basierend auf einer Differenz-Drehzahl bestimmt wird, die eine Differenz zwischen der End-Motor-Drehzahl und der Basis-Motor-Drehzahl ist.

4. Ein Spreiz-Sitz-Fahrzeug gemäß irgendeinem der Ansprüche 1 bis 3, wobei die Ziel-Motor-Drehzahl-Berechnungs-Einheit (13) konfiguriert ist, um die Korrektur-Drehzahl ohne Änderung beizubehalten, wenn eine vorbestimmte Bedingung bezüglich eines Fahr-Zustands des Spreiz-Sitz-Fahrzeugs erfüllt ist.

5. Ein Spreiz-Sitz-Fahrzeug gemäß Anspruch 4, wobei die vorbestimmte Bedingung, die sich auf den Fahr-Zustand des Spreiz-Sitz-Fahrzeugs bezieht, mindestens aufweist, einen Fall, in dem das Spreiz-Sitz-Fahrzeug abbiegt, einen Fall, in dem das Spreiz-Sitz-Fahrzeug einen Hügel hinauffährt, einen Fall, in dem das Spreiz-Sitz-Fahrzeug einen Hügel hinunterfährt, einen Fall, in dem ein absoluter Wert einer Beschleunigung des Spreiz-Sitz-Fahrzeugs gleich oder größer als ein Beschleunigungs-Bestimmungs-Wert ist, einen Fall, in dem ein Kickdown-Betrieb an dem Spreiz-Sitz-Fahrzeug durchgeführt ist, oder einen Fall, in dem eine Motorbremse verwendet ist.

6. Ein Spreiz-Sitz-Fahrzeug gemäß irgendeinem der Ansprüche 1 bis 5, wobei die Ziel-Motor-Drehzahl-Berechnungs-Einheit (13) konfiguriert ist, um die Verzögerungs-Verarbeitung auszuführen, nachdem auf das Verstreichen einer vorbestimmten Warte-Zeit-Periode gewartet wurde, wenn die Verzögerungs-Verarbeitung zur Verringerung der Korrektur-Drehzahl ausführt ist.

7. Ein Spreiz-Sitz-Fahrzeug gemäß irgendeinem der Ansprüche 1 bis 6, das weiterhin umfasst:
ein elektronisch gesteuertes Drossel-Ventil; und
eine Ziel-Drossel-Ventil-Öffnungsgrad-Berechnungs-Einheit (17), die konfiguriert ist, um einen Ziel-Drossel-Ventil-Öffnungsgrad des elektronisch gesteuerten Drossel-Ventils basierend auf der Ziel-Ausgabe und der Ziel-Motor-Drehzahl zu berechnen.

8. Ein Verfahren zum Steuern eines Spreiz-Sitz-Fahrzeugs, das Verfahren umfasst die Schritte:
Berechnen einer Ziel-Ausgabe basierend auf Informationen bezüglich eines Beschleuniger-Betätigungs-Betrags und Informationen bezüglich einer Fahrzeug-Geschwindigkeit;
Berechnung einer Basis-Motor-Drehzahl auf der Basis der Informationen über die Fahrzeug-Geschwindigkeit;
Berechnung einer End-Motor-Drehzahl basierend auf der Ziel-Ausgabe;
Berechnung einer Ziel-Motor-Drehzahl durch Addition einer Korrektur-Drehzahl zu der Basis-Motor-Drehzahl;
Halten der Korrektur-Drehzahl und Durchführen einer Verzögerungs-Verarbeitung bei einer Änderung in der Korrektur-Drehzahl; und
Berechnen eines Soll-Übersetzungsverhältnisses eines elektronisch gesteuerten kontinuierlich-variablen Getriebes (5) basierend auf der Ziel-Motor-Drehzahl.

9. Ein Verfahren zum Steuern eines Spreiz-Sitz-Fahrzeugs gemäß Anspruch 8, wobei in der Verzögerungs-Verarbeitung eine Zeit-Konstante, die verwendet wird, wenn die Korrektur-Drehzahl verringert wird, kleiner ist als eine Zeit-Konstante, die verwendet wird, wenn die Korrektur-Drehzahl erhöht wird.

10. Ein Verfahren zum Steuern eines Spreiz-Sitz-Fahrzeugs gemäß Anspruch 8 oder 9, das weiterhin einen Schritt zum Berechnen einer End-Motor-Drehzahl basierend auf der Ziel-Ausgabe umfasst,
wobei die Verzögerungs-Verarbeitung die Verarbeitung des Bewirkens einer asymptotischen Annäherung der Korrektur-Drehzahl an eine Basis-Korrektur-Drehzahl aufweist, die basierend auf einer Differenz-Drehzahl bestimmt wird, die eine Differenz zwischen der End-Motor-Drehzahl und der Basis-Motor-Drehzahl ist.

11. Ein Verfahren zum Steuern eines Spreiz-Sitz-Fahrzeugs gemäß irgendeinem der Ansprüche 8 bis 10, das weiterhin einen Schritt des Beibehaltens der Korrektur-Drehzahl ohne Änderung, wenn eine vorbestimmte Bedingung bezüglich eines Fahr-Zustands des Spreiz-Sitz-Fahrzeugs erfüllt ist, umfasst.

12. Ein Verfahren zum Steuern eines Spreiz-Sitz-Fahrzeugs gemäß Anspruch 11, wobei die vorbestimmte Bedingung, die sich auf den Fahr-Zustand des Spreiz-Sitz-Fahrzeugs bezieht, mindestens aufweist, einen Fall, in dem das Spreiz-Sitz-Fahrzeug abbiegt, einen Fall, in dem das Spreiz-Sitz-Fahrzeug einen Hügel hinauffährt, einen Fall, in dem das Spreiz-Sitz-Fahrzeug einen Hügel hinunterfährt, einen Fall, in dem ein absoluter Wert einer Beschleunigung des Spreiz-Sitz-Fahrzeugs gleich oder größer als ein Beschleunigungs-Bestimmungs-Wert ist, einen Fall, in dem ein Kickdown-Betrieb an dem Spreiz-Sitz-Fahrzeug durchgeführt ist, oder einen Fall, in dem eine Motorbremse verwendet ist.

13. Ein Verfahren zum Steuern eines Spreiz-Sitz-Fahrzeugs gemäß irgendeinem der Ansprüche 8 bis 12, das weiterhin einen Schritt, bei dem, wenn eine Verzögerungs-Verarbeitung zum Verringern der Korrektur-Drehzahl durchgeführt ist, nachdem auf das Verstreichen einer vorbestimmten Warte-Zeit-Periode gewartet, umfasst.

14. Ein Verfahren zum Steuern eines Spreiz-Sitz-Fahrzeugs gemäß irgendeinem der Ansprüche 8 bis 13, das ferner einen Schritt zum Berechnen eines Ziel-Drossel-Ventil-Öffnungsgrads eines elektronisch gesteuerten Drossel-Ventils basierend auf der Ziel-Ausgabe und der Ziel-Motor-Drehzahl umfasst.

## Revendications

1. Véhicule à enfourcher, comprenant :
une transmission à variation continue et commande électronique (5) ;
une unité de calcul de sortie cible (16B) qui est configurée pour calculer une sortie cible sur la base d'informations relatives à une quantité de fonctionnement d'accélérateur et d'informations relatives à une vitesse de véhicule ;
une unité de calcul de vitesse de rotation de base de moteur (11) qui est configurée pour calculer une vitesse de rotation de base de moteur sur la base des informations relatives à la vitesse de véhicule ;
une unité de calcul de vitesse de rotation cible de moteur (13) qui est configurée pour calculer une vitesse de rotation cible de moteur en ajoutant une vitesse de rotation de correction à la vitesse de rotation de base de moteur, en maintenant la vitesse de rotation de correction, et en effectuant un traitement de retard sur un changement de la vitesse de rotation de correction ; et
une unité de calcul de rapport de vitesse cible (14) qui est configurée pour calculer un rapport de vitesse cible de la transmission à variation continue et commande électronique (5) sur la base de la vitesse de rotation cible de moteur.

2. Véhicule à enfourcher selon la revendication 1, dans lequel l'unité de calcul de vitesse de rotation cible de moteur (13) est configurée pour utiliser une constante de temps de traitement de retard pour diminuer la vitesse de rotation de correction qui est inférieure à une constante de temps de traitement de retard pour augmenter la vitesse de rotation de correction.

3. Véhicule à enfourcher selon la revendication 1 ou 2, comprenant en outre une unité de calcul de vitesse de rotation finale de moteur (12) qui est configurée pour calculer une vitesse de rotation finale de moteur sur la base de la sortie cible,
dans lequel l'unité de calcul de vitesse de rotation cible de moteur (13) est configurée pour effectuer un traitement de retard pour amener la vitesse de rotation de correction à s'approcher de manière asymptotique d'une vitesse de rotation de correction de base qui est déterminée sur la base d'une vitesse de rotation différentielle qui est une différence entre la vitesse de rotation finale de moteur et la vitesse de rotation de base de moteur.

4. Véhicule à enfourcher selon l'une quelconque des revendications 1 à 3, dans lequel l'unité de calcul de vitesse de rotation cible de moteur (13) est configurée pour maintenir la vitesse de rotation de correction sans changement lorsqu'une condition prédéterminée relative à un état de déplacement du véhicule à enfourcher est satisfaite.

5. Véhicule à enfourcher selon la revendication 4, dans lequel la condition prédéterminée concernant l'état de déplacement du véhicule à enfourcher comprend au moins l'un parmi un cas où le véhicule à enfourcher se déplace en courbe, un cas où le véhicule à enfourcher grimpe une côte, un cas où le véhicule à enfourcher descend une côte, un cas où une valeur absolue d'une accélération du véhicule à enfourcher est égale ou supérieure à une valeur de détermination d'accélération, un cas où une opération de rétrogradage (kickdown) est effectuée sur le véhicule à enfourcher, ou un cas où un frein moteur est utilisé.

6. Véhicule à enfourcher selon l'une quelconque des revendications 1 à 5, dans lequel l'unité de calcul de vitesse de rotation cible de moteur (13) est configurée pour exécuter le traitement de retard après avoir attendu qu'une période de temps d'attente prédéterminée se soit écoulée lors de le mise en œuvre d'un traitement de retard pour diminuer la vitesse de rotation de correction.

7. Véhicule à enfourcher selon l'une quelconque des revendications 1 à 6, comprenant en outre :
un papillon des gaz à commande électronique ; et
une unité de calcul de degré d'ouverture cible de papillon (17) qui est configurée pour calculer un degré d'ouverture cible de papillon du papillon des gaz à commande électronique sur la base de la sortie cible et de la vitesse de rotation cible de moteur.

8. Procédé de commande d'un véhicule à enfourcher, le procédé comprenant les étapes consistant à :
calculer une sortie cible sur la base d'informations relatives à une quantité de fonctionnement d'accélérateur et d'informations relatives à une vitesse de véhicule ;
calculer une vitesse de rotation de base de moteur sur la base des informations relatives à la vitesse de véhicule ;
calculer une vitesse de rotation finale de moteur sur la base de la sortie cible ;
calculer une vitesse de rotation cible de moteur en ajoutant une vitesse de rotation de correction à la vitesse de rotation de base de moteur ;
maintenir la vitesse de rotation de correction et effectuer un traitement de retard sur un changement de la vitesse de rotation de correction ; et
calculer un rapport de vitesse cible d'une transmission à variation continue et commande électronique (5) sur la base de la vitesse de rotation cible de moteur.

9. Procédé de commande d'un véhicule à enfourcher selon la revendication 8, dans lequel, lors du traitement de retard, une constante de temps utilisée lorsque la vitesse de rotation de correction est diminuée est inférieure à une constante de temps utilisée lorsque la vitesse de rotation de correction est augmentée.

10. Procédé de commande d'un véhicule à enfourcher selon la revendication 8 ou 9, comprenant en outre une étape de calcul d'une vitesse de rotation finale de moteur sur la base de la sortie cible,
dans lequel le traitement de retard comprend un traitement consistant à amener la vitesse de rotation de correction à s'approcher de manière asymptotique d'une vitesse de rotation de correction de base qui est déterminée sur la base d'une vitesse de rotation différentielle qui est une différence entre la vitesse de rotation finale de moteur et la vitesse de rotation de base de moteur.

11. Procédé de commande d'un véhicule à enfourcher selon l'une quelconque des revendications 8 à 10, comprenant en outre une étape consistant à maintenir la vitesse de rotation de correction sans changement lorsqu'une condition prédéterminée concernant un état de déplacement du véhicule à enfourcher est satisfaite.

12. Procédé de commande d'un véhicule à enfourcher selon la revendication 11, dans lequel la condition prédéterminée concernant l'état de déplacement du véhicule à enfourcher comprend au moins l'un parmi un cas où le véhicule à enfourcher se déplace en courbe, un cas où le véhicule à enfourcher grimpe une côte, un cas où le véhicule à enfourcher descend une côte, un cas où une valeur absolue d'une accélération du véhicule à enfourcher est égale ou supérieure à une valeur de détermination d'accélération, un cas où une opération de rétrogradage (kickdown) est effectuée sur le véhicule à enfourcher, ou un cas où un frein moteur est utilisé.

13. Procédé de commande d'un véhicule à enfourcher selon l'une quelconque des revendications 8 à 12, comprenant en outre une étape consistant, lors de la mise en œuvre d'un traitement de retard pour diminuer la vitesse de rotation de correction, à exécuter le traitement de retard après avoir attendu qu'une période de temps d'attente prédéterminée se soit écoulée.

14. Procédé de commande d'un véhicule à enfourcher selon l'une quelconque des revendications 8 à 13, comprenant en outre une étape de calcul d'un degré d'ouverture cible de papillon d'un papillon des gaz à commande électronique sur la base de la sortie cible et de la vitesse de rotation cible de moteur.
